(19) Europäisches Patentamt
European Patent Office
Office européen des brevets

(11) **EP 0 649 233 B1**

(12) **EUROPEAN PATENT SPECIFICATION**

(45) Date of publication and mention
of the grant of the patent:
**17.04.1996 Bulletin 1996/16**

(51) Int Cl.$^6$: **H04L 7/02**

(21) Application number: **94114981.7**

(22) Date of filing: **22.09.1994**

(54) **Method for recovering symbol synchronism in receivers of digitally modulated signals and circuit derived therefrom**

Verfahren zur Rückgewinnung der Zeichensynchronisation in Empfängern digital modulierter Signale und Schaltung dazu

Méthode pour recouvrir la synchronisation de symbols en récepteurs de signaux module-digital et circuit pour cela

(84) Designated Contracting States:
**AT BE CH DE DK ES FR GB GR IT LI NL SE**

(30) Priority: **14.10.1993 IT MI932176**

(43) Date of publication of application:
**19.04.1995 Bulletin 1995/16**

(73) Proprietor: **SIEMENS TELECOMUNICAZIONI S.P.A.**
**I-20060 Cassina de Pecchi (Milano) (IT)**

(72) Inventor: **Mazzola, Ezio**
**I-20094 Buccinasco (Milano) (IT)**

(56) References cited:
**EP-A- 0 270 160        EP-A- 0 547 539**
**DE-A- 3 707 762**

# Description

The present invention relates to the field of numerical transmissions and specifically concerns a method for symbol synchronism recovery in digitally modulated signal receivers and the circuit derived therefrom.

As is known to correctly read sequentially transmitted symbols generally present downstream of a demodulator in the form of appropriately shaped pulses, it is necessary to read the amplitude of said pulses opposite the maximum value coinciding with the value at the central point. This assumes the use of a reading clock signal having the same cadence as the symbols, whose reading edge coincides with the instant corresponding to the central value of the symbol. Local generation of a signal having the above characteristics is rather problematical, especially because of an unavoidable if small frequency error between the signal generated locally in relation to that used in transmission. It is therefore necessary to provide appropriate synchronisation making use of the information contained in or obtainable from the data received.

A method widely used today for obtaining said synchronisation is that of using a phase locked loop (PLL). The same method is also used in demodulators for digitally modulated signals, MPSK, QAM, etc., for recovery of the demodulation carrier.

As concerns circuit architecture of a PLL, it has long been known but it may be useful to recall that a PLL comprises essentially a voltage controlled oscillator (VCO), a phase comparator supplying a measurement of phase shift, or phase error $\varepsilon$, between a reference signal and a clock signal generated by the VCO, an amplifier and lastly a loop filter of the low-pass type. The loop filter extracts from the signal emerging from the phase comparator the nearly continuous component. The latter is a function V ($\varepsilon$) which when appropriately amplified controls in negative feedback the VCO. The PLL first links in frequency and then in phase to the reference signal, supplying at output a 'clean' clock signal.

As known, the digital modulation of a carrier by a modulating signal whose amplitude varies in a pseudo-causal manner in time, as takes place for example in vocal and television etc. signals, produces a modulated signal in which the symbol synchronism information is not contained directly. It is therefore necessary to operate an appropriate symbol distortion in reception, e.g. using a 'quadrator' or rectifier in order to obtain the above reference signal for the phase comparator.

Examples of symbol, or carrier, synchronism recovery circuits using a non-linear regenerator are supplied in the volume entitled 'Phaselock Techniques' by Floyd M. Gardner published by John Wiley & Sons, second edition, pages 215-249. Said volume constitutes also a basic bibliographical reference for understanding all the problems of PLLs including that of hangup at points where the phase error $\varepsilon$ is $\pm n\pi$ with odd values of n. As known, at these points, because of the periodicity $2\pi$ of

the phase error function and the sinusoidal form thereof, the voltage controlling the VCO is cancelled. The equilibrium of the system is however unstable. Indeed, the slope of the phase error function is such that a shift from one of said points does not bring back the operation of the PLL therein but makes it evolve towards a stable equilibrium point, also characterised by null phase error, which is reached only after an indefinite time.

In view of the above, the symbol or carrier synchronism recovery circuits using a PLL can exhibit, due to the possible hangups, extremely long acquisition times, so much so that they cannot be used, except in special cases, in time division multiple access systems (TDMA).

In the majority of known methods setting out to correct the shortcomings due to hangups of a PLL, the latter are detected with the precise purpose of adding to the control voltage VCO a pulse or other transient voltage form leading more rapidly the PLL towards the correct link point. Such methods have however the serious shortcoming of slowness in leading the PLL towards the correct link point. Indeed, to switch the operation from an unstable equilibrium point to a stable equilibrium point the PLL must always recover the phase angle $\varepsilon$ of amplitude $\pi$ in a time which cannot in the best of cases be less than the time constant of the loop filter.

Therefore the purpose of the present invention is to overcome the above shortcomings and indicate a symbol synchronism recovery method comprising typical operations of a PLL whose VCO is used for generating a symbol reading clock signal, and operations aimed at correcting the phase of the above clock signal, when it is erroneously (false) locked on that of the symbol synchronism signal.

The method in question allows rapid recovery of the correct symbol reading clock signal at the hangup points since it acts simultaneously both on the phase of the signal generated by the VCO and on the control voltage of the VCO. The action on the voltage is aimed only at stabilising the equilibrium point at which the PLL is currently found, avoiding a broad $\pi$ phase recovery.

To achieve said purposes the object of the present invention is a method of recovering the symbol synchronism in the reception of digitally modulated signals consisting of sampling the symbols at the double-frequency of the symbol frequency by using a sampling signal generated by a VCO controlled by a phase shift or phase error function existing between a synchronism extracted from the symbols and a symbol reading clock signal generated locally by division by two of the signal frequency generated by the VCO. Said error function is obtained by low-pass filtering a sequence whose individual terms are in turn obtained by calculating, with symbol cadence, an algebraic sum of samples appropriately 'distorted' for two or more symbols with said distorted samples being preceded by a negative or positive sign alternating between one sample and the next. There is also verified the existence of a sign discordance between the samples belonging to sequential sample pairs in order to invert the error function sign and the reading clock signal of the symbols generated locally, as better explained in claims 1 to 7.

The method which is the object of the present invention lends itself to an immediate circuit embodiment. Therefore, another object of the present invention is a symbol synchronism recovery circuit in digitally modulated signal receivers consisting of:

- a PLL in which the VCO generates a signal with frequency double the symbol frequency and which is used by a symbol sampling circuit to obtain a first sample sequence,
- a divider by two of the signal frequency generated by the VCO to obtain a symbol reading clock signal,
- an adder circuit, constituting the phase comparator of the PLL, which with symbol cadence performs the algebraic sum of the absolute values of two, or multiples of two, sequential samples of said first sequence preceded by a - or + sign alternating between one sample and the next to obtain a second sequence which by passing through a low pass filter supplies a signal for control of the VCO,
- a hangup detection circuit for the PLL which analyses the sign of the samples and generates a hangup signal for control of a circuit performing a sample interpolation, obtaining the central values of the symbols for control of a phase inverter of the symbol reading clock and of a polarity inverter of the control signal of the VCO, as better explained in claims 8 to 16.

Since the symbol synchronism recovery circuit which is the object of the present invention derives from a method in which the individual operations are for the most part additions and subtractions and combinatory logical functions, it is simple to manufacture, low in cost, and capable of operating correctly even with high symbol frequencies. In the preferred embodiment of the digital technique circuit it also becomes possible to integrate the entire circuit on a single chip, minimising costs and optimising performance. The digital technique embodiment is in line with the most modern design tendencies in the framework of MPSK or QAM modulation systems.

Apart from the enormous advantages which the digital technique possesses in relation to analog, it remains however penalised by the limited operating speed of the analog-to-digital converters presently available and by that of any highly integrated circuits (VLSI). This puts a limit on the maximum performance achievable in terms of speed (bit rate). Thus privileged are the circuitry solutions using a low number of samples per symbol. The circuit which is the object of the present invention uses only two samples per symbol, equivalent to the theoretical limit of the Nyquist criterion.

As concerns the method and circuit which are the object of the present invention it is necessary to make clear that the above operation of algebraic addition with alternating sign is nothing but a special application of the Fourier discrete transform with the sequence formed by the absolute values of the samples, as clarified below.

Comparing the circuit which is the object of the present invention with that known consisting of a non-linear regenerator followed by a PLL there can be appreciated the considerable simplification introduced in having replaced the regenerator, i.e. distorter and selective filter, and the phase comparator of the PLL with a simple adder.

An application example of the Fourier discrete transform in a synchroniser is described in the article by Martin Oerder and Heinrich Meyr entitled 'Digital Filter and Square Timing Recovery' published in IEEE TRANSACTIONS ON COMMUNICATIONS, May 1988, Volume 36, no. 5, pages 605 to 612. In the example, the transform is used to estimate the phase error $\varepsilon(t)$ possessed by a clock generated locally and used for sampling the analog signal in base band. As stated explicitly in the conclusions of the article, the application is related to the digital embodiment of a synchronism recovery circuit of the non-feedback type in which the estimate of the delay is used to control 'forward' the interpolation units for reading the symbols, not described in the article, which act on the digitised samples of the symbols (4 samples per symbol). Said samples are obtained by sampling the symbols at fixed-frequency by means of a sampling signal generated by a free oscillator.

For the calculation, precise information is necessary on amplitude and phase for the symbol frequency obtained by construing a sequence $x_k$ of numerical samples of the squared modulus of the symbol vectors. This stated, the article contains a mathematical demonstration of the fact that the expression: $\hat{e}= -1/2\pi \ arg(Xm)$ is an estimate of said time delay $\varepsilon$ normalised in relation to the symbol time T, where Xm is the complex coefficient at the symbol frequency calculated by applying the Fourier discrete transform to the sequence $x_k$ as shown in formula (4) on page 605.

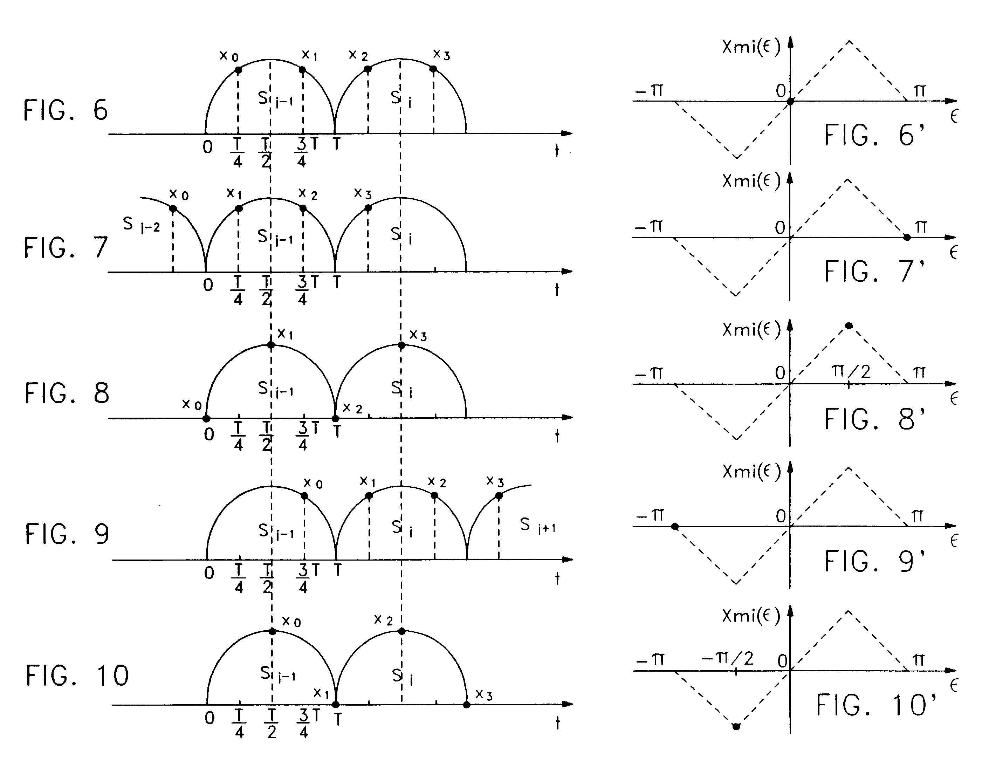

Since the synchronisation circuit which is the object of the present invention is the 'feedback' type, at least as concerns control of the VCO, calculation of the Fourier discrete transform is amenable to a simplification in relation to the method mentioned. Indeed, more than the phase error expressed by the value of the angle $\varepsilon$, there becomes necessary a function thereof for control of the VCO. Said function has been identified only in the imaginary part of the complex coefficient Xm whose mathematical expression is a summation of sinusoidal type functions, just as the voltage form $V(\varepsilon)$ at the output of a phase comparator is 'sinusoidal'. The validity of the choice is amply proven by experimental tests and by the evidence which is given by the illustration of FIGS. 6 to 10 and 6' to 10'. The great advantage which derives therefrom is that for calculation only two samples per symbol are sufficient instead of the four of the mentioned method.

Further purposes and advantages of the present invention are clarified in the detailed description of an embodiment thereof given below by way of nonlimiting example with reference to the annexed drawings wherein:

FIG. 1 shows a block diagram of a symbol synchronism recovery circuit SINC which is the object of the present invention,

FIGS. 2 and 3 show the circuits included in the blocks indicated by HU-DET and SIM-CORR respectively in FIG. 1,

FIG. 4 shows the behaviour of a function used in the blocks SIGN1 and SIGN2 of FIG. 1,

FIG. 5 shows the behaviour of a function $Xmi(\varepsilon)$ controlling the VCO of FIG. 1,

FIGS. 6, 7, 8, 9 and 10 show in five different temporal situations as many sample sequences reaching the inputs of the circuit SINC of FIG. 1, placed in relationship with the respective symbols,

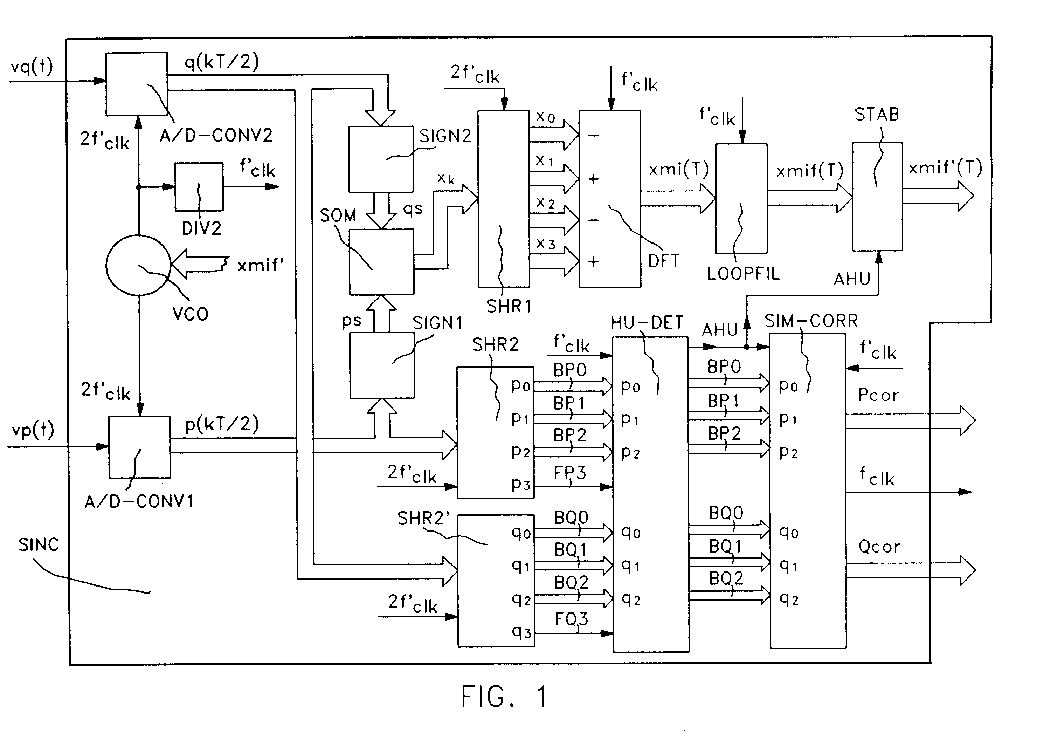

FIGS. 6', 7', 8', 9' and 10' show as many values of the function $Xmi(\varepsilon)$ calculated by a block DFT of FIG. 1 in the five situations of FIGS. 6 to 10,

FIGS. 11 and 11' show the temporal behaviour of some symbols reaching the circuit SINC and that of the related sampling and reading signals in the case of correctly recovered synchronism, and

FIGS. 12 and 12' show the temporal behaviour of the same symbols as in FIGS. 11 and 11' and that of the related sampling and reading signals in the case of synchronism not correctly recovered.

With reference to FIG. 1, vp(t) and vq(t) indicate two trains of pulses in base band representing the components in phase and in quadrature respectively of a vector, termed also symbol, previously used in a modulator, not shown in the figures, to digitally modulate (MPSK, QAM, etc.) a sinusoidal carrier. Hereinafter for the sake of brevity the components vp(t) and vq(t) are also called symbols where this does not cause confusion.

The pulses vp(t) and vq(t) represent the input signals of the circuit SINC and reach the input of respective analog-to-digital converters A/D-CONV1 and A/D-CONV2 to be converted in numerical samples of said pulses. The latter are indicated by p(kT/2) and q(kT/2) respectively, where T is the duration of the interval of time between two symbols, 2 is the number of samples per symbol, and k is an index identifying a generic sample in a respective sequence. The converters A/D-CONV1 and A/D-CONV2 have a sampling input to which arrives a sampling signal $2f'_{clk}$, with a frequency double of that of symbol equal to 1/T, generated by a voltage-controlled oscillator VCO. The signal $2f'_{clk}$ also reaches a frequency divider by two DIV2 whose output signal at the symbol frequency is indicated by $f''_{clk}$. The numerical samples p(kT/2) and q(kT/2) reach the input of two identical blocks SIGN1 and SIGN2, respectively each of which comprises an input sample sign detector, whose output is connected to a first input of a two-input multiplier at whose second input arrives the same input sample as the respective block SIGN1 or SIGN2. The realisation of said blocks is known to those skilled in the art hence for the sake of brevity the circuits included therein are not indicated in the figures. At the output of the blocks SIGN1 and SIGN2 are present respective numerical output samples ps and qs reaching the inputs of a digital adder SOM at whose output is present a sequence of samples $x_k$. The samples $x_k$ reach the input of a shift register SHR1, timed by the signal $2f'_{clk}$ whose memory capacity is four samples $x_k$ which can be taken in parallel on four outputs where they are indicated by $x_0$, $x_1$, $x_2$ and $x_3$ and correspond to samples $x_{k-3}$, $x_{k-2}$, $x_{k-1}$, $x_k$ respectively where $x_k$ is the actual sample. The four outputs of SHR1 are methodically connected to as many inputs of a block DFT indicated by -, +, -, +. The block DFT is timed by the signal $f'_{clk}$ coming from DIV2. At the output of the block DFT is present a sequence xmi(T) which is sent to the input of a low pass digital filter LOOPFIL, termed also loop filter, and also timed by the signal $f'_{clk}$. At the output of the filter LOOPFIL is present a filtered sequence xmif (T) which is sent to a loop stabiliser block STAB controlled by a hangup detection signal AHU generated by a block HU-DET. At the output of the loop stabiliser block STAB is present a control signal xmif'(T) reaching the numerical control input of the VCO.

The numerical samples p(kT/2) and q(kT/2) arrive also at the inputs of two respective shift registers SHR2 and SHR2' timed by the signal $2f'_{clk}$. The registers SHR2 and SHR2' have a memory capacity of four samples each which can be taken in parallel on as many outputs where they are indicated by $p_0$, $p_1$, $p_2$, $p_3$ and $q_0$, $q_1$, $q_2$, $q_3$ respectively. Three outputs of SHR2 corresponding to those of the samples $p_0$, $p_1$ and $p_2$ are connected to as many inputs of the hangup detector block HU-DET by means of the respective busses BP0, BP1 and BP2. The fourth output of SHR2 is connected to a fourth input of HU-DET by means of a single wire FP3 on which travels the most significant bit corresponding to the sign bit of the sample $(p_3)$ present at the fourth output of SHR2.

Similarly three outputs of SHR2' corresponding to those of the samples $q_0$, $q_1$, $q_2$ are connected to a fifth, sixth and seventh input of the block HU-DET by means of respective busses BQ0, BQ1 and BQ2. The fourth output of SHR2' is connected to an eighth input of HU-DET by means of a single wire FQ3 on which travels the most significant bit corresponding to the sign bit of the sample $(q_3)$ present at the fourth output of SHR2'. The block HU-DET, timed by the signal $f'_{clk}$ coming from the block DIV2, generates the hangup detection signal AHU which it sends to the block STAB and to a synchronism correction block SIM-CORR. The busses BP0, BP1, BP2 and BQ0, BQ1, BQ2 traverse the block HU-DET and connect to as many inputs of the synchronism correction block SIM-CORR. The latter processes the samples received and generates at output numerical values Pcor and Qcor corresponding to an estimate of the central values of the components vp(t) and vq(t) at the input of the circuit SINC. The numerical values Pcor and Qcor are present on respective output busses of the synchronism correction block SIM-CORR. To said block arrives also the signal $f'_{clk}$ which will be appropriately treated on the basis of the logical value taken on by the hangup detection signal AHU and made available at output as the $f_{clk}$ associated with the values Pcor and Qcor.

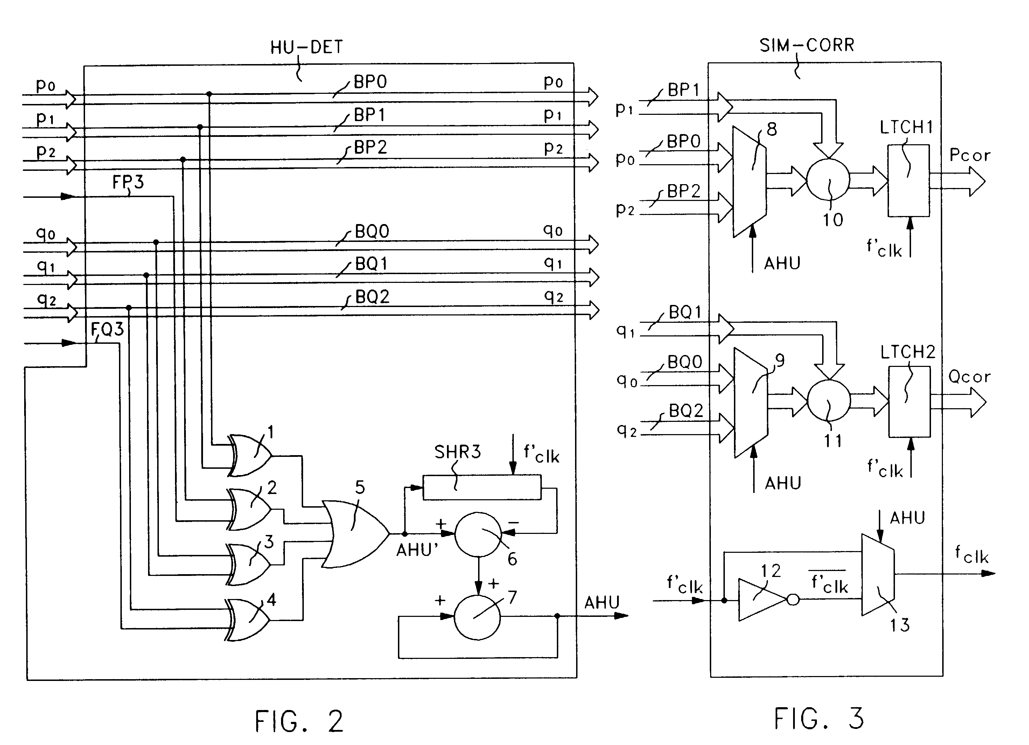

With reference to FIG. 2, in which the same elements as in FIG. 1 are indicated by the same symbols, in the block HU-DET can be seen four logical gates at two inputs of the EX-OR type indicated by 1, 2, 3 and 4. The inputs of the gate 1 are connected to the wires of the busses BP0 and BP1 respectively on which travel the most significant bits, corresponding to the sign bits, of the samples present there. The inputs of the gate 2 are connected to the wire FP3 and the wire of the bus BP2 respectively on which travels the most significant bit of the sample present thereon. Similarly the inputs of the gate 3 are connected to the wires of the busses BQ0 and BQ1 respectively on which travel the most significant bits, corresponding to the sign bits, of the samples present there. The inputs of the gate 4 are connected to the wire FQ3 and to the wire of the bus BQ2 respectively on which travels the most significant bit of the sample present there.

The outputs of the four logical gates 1, 2, 3 and 4 are connected to as many inputs of a logical gate 5 of the OR type. The output of the gate 5 is connected to the + input of an adder 6 and to the input of a shift register SHR3, 16 bits long, and timed by the signal $f'_{clk}$ (FIG. 1). The output of the register SHR3 is connected to the input of the same adder 6 whose output is connected to a first input of an add circuit 7. The second input of the adder 7 is connected to the output of the same adder where there can also be taken the hangup detection signal AHU.

With reference to FIG. 3, in which the same elements as in FIGS. 1 and 2 are indicated by the same symbols, there are noted the busses BP0, BP1, BP2 and BQ0, BQ1, BQ2 (FIG. 2) entering the synchronism correction block SIM-CORR. In said block can be seen a 2-input selector 8 connected to the busses BP0 and BP2, at whose selection input arrives the hangup detection signal AHU (FIG. 2). The output of the 2-input selector 8 is connected to a first input of an interpolation circuit 10, typically a 2-input digital adder, whose second input is connected to the bus BP1. The output of the interpolation circuit 10 is connected to the input of a memory register LTCH1 timed by the signal $f'_{clk}$ (FIG. 1). The output of the memory register LTCH1 corresponds to the output bus of the synchronism correction block SIM-CORR carrying the numerical value Pcor. In the synchronism correction block SIM-CORR there can also be noted a 2-input selector 9 connected to the busses BQ0 and BQ2 at whose selection input arrives the hangup detection signal AHU (FIG. 2). The output of the 2-input selector 9 is connected to a first input of the interpolation circuit 11, typically a 2-input digital adder, whose second input is connected to the bus BQ1. The output of the interpolation circuit 11 is connected to the input of a memory register LTCH2 timed by the signal $f'_{clk}$ (FIG. 1). The output of the memory register LTCH2 corresponds to the output bus of the synchronism correction block SIM-CORR carrying the numerical value Qcor.

The signal $f'_{clk}$ entering the synchronism correction block SIM-CORR reaches a first input of a selector 13 and an inverter 12 at whose output is present a negated signal $f'_{clk}$. The output of the inverter 12 is connected to a second input of the selector 13 at whose selection input arrives the hangup detection signal AHU and at whose output is present the signal $f_{clk}$ representing the correct symbol reading clock signal.

Operation of the symbol synchronism recovery circuit of FIGS. 1, 2 and 3 is now discussed with the aid of the remaining figures. It is premised that the input pulses vp(t) and vq(t) come from a demodulator and are previously filtered to limit their band to the value 1/T for the purposes of the subsequent sampling. The wave form of vp(t) and vq(t) is symmetrical in relation to a central value. The amplitude values can be positive, negative or null. In the case where vp(t) and vq(t) come from modulated signals MPSK transmitted with mean unit power, the amplitudes in the central points take on the values ± 1. In the case of modulation QAM said amplitudes can also take on discrete values between 0 and 1. The samples p(kT/2) and q(kT/2) at the inputs of the respective blocks SIGN1 and SIGN2 have a cadence T/2, the corresponding samples ps(kT/2) and qs(kT/2) output from said blocks take on the following expressions:

$$ps(kT/2) = p(kT/2) \times sign(x), \text{ with } x = p(kT/2)$$
$$qs(kT/2) = q(kT/2) \times sign(x), \text{ with } x = q(kT/2),$$

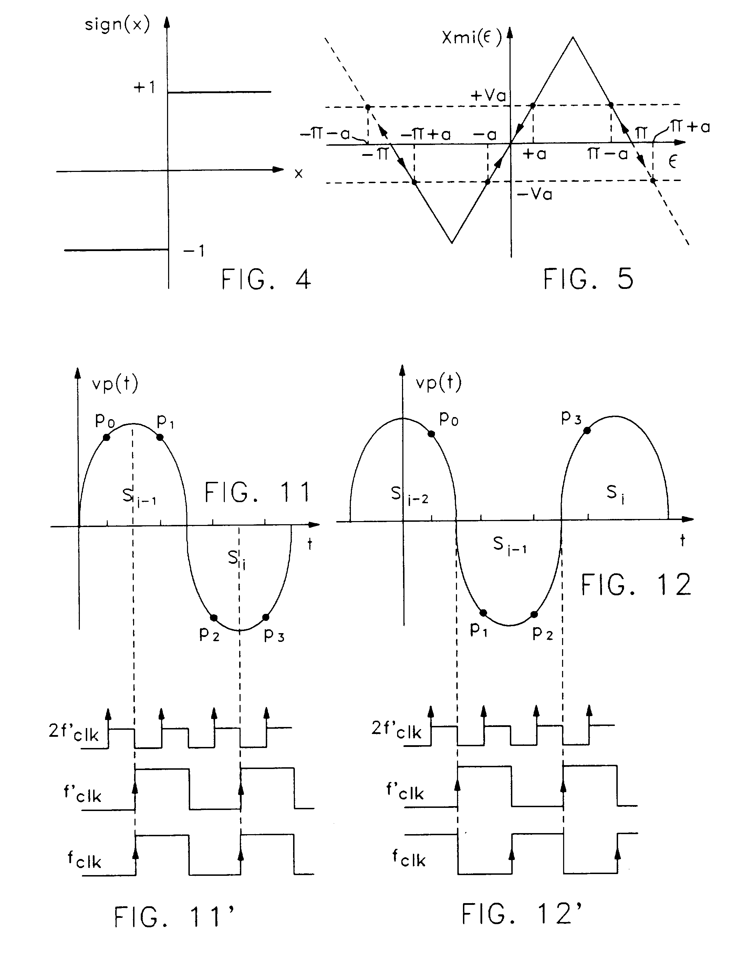

where sign(x) is the transfer function of the sign detection circuit of the input samples, not shown in the figures, included in the blocks SIGN1 and SIGN2. The function sign(x) is illustrated in FIG. 4. From the foregoing it can be seen that the distortion introduced on the input sample amplitude from the blocks SIGN1 and SIGN2 consists of calculating the absolute value of said samples. At the output of the block SOM is present the sequence $x_k = ps(kT/2) + qs(kT/2)$ whose terms sum the amplitude distortion of the samples of both the symbol components and hence of the symbols themselves. The frequency spectrum of the sequence $x_k$ also contains, as known, a component at the symbol frequency signal $f'_{clk} = 1/2\pi T$.

It is also premised that the circuit of FIG. 1 comprises a digital PLL whose membership blocks are specified below. The control voltage of the block VCO is found by calculating in an appropriate manner only the imaginary part of the complex coefficient at the symbol frequency of the Fourier discrete transform of the sequence $x_k$. Said calculation leads to a discrete function of the phase error $\varepsilon$ whose behaviour, after filtering by the filter LOOPFIL and conversion to analog, is that of a function Xmi($\varepsilon$) set forth in FIG. 5. The mathematical expression of said coefficient is a summation of products of the $x_k(exp-j2\pi k/N)$ type in which the imaginary part is capable of approximating the behaviour of the function Xmi($\varepsilon$). The calcu-

lation of the imaginary part must be conducted considering a number of samples per symbol greater than two in order to avoid its being constantly null. By choosing the value four the calculation is reduced to a simple summation in which each addend is a sample $x_k$ multiplied by ±1 or by ±j, where j is a symbol indicating a complex value. The terms entering into said discrete function controlling the VCO are only those which in the 4-sample per symbol formula are preceded by ±j. In conclusion, the samples $x_k$ per symbol actually required are still two and correspond to physical samples coming from the sampling. The remaining two samples per symbol are fictitious samples with null value introduced for the purposes of the calculation only.

The above calculation is performed by the block DFT consisting basically of a 4-input adder in which the addend present at a first input is taken with the minus sign, that present at a second input is taken with the plus sign, that present at a third input is taken with the minus sign, and finally that present at a fourth input is taken with the plus sign. Those skilled in the art are capable in the absence of further information to obtain a similar adder. The expression calculated by the block DFT during a time T is at the end as follows: sequence xmi(T) = $-x_0$ $+x_1$ $-x_2$ $+x_3$ which in more general terms becomes:

$$xmi(T) = -x_{k-3} +x_{k-2} -x_{k-1} +x_k.$$

Operationally, the samples $x_k$ are memorised in SHR1 on the rising edges of the signal $2f'_{clk}$. Considering steady state operation, at each rising edge the oldest sample ($x_0$) is lost, the remaining samples translate by one position, and a new sample ($x_3$) enters into SHR1. The adder DFT is enabled on the falling edge of the signal $f'_{clk}$. The calculation is finished in a time less that T/2, e.g. before the configuration of the inputs is changed. It follows that the summation is performed at symbol cadence and the same pair of samples enters therein twice.

The sequence xmi(T) is designed for control of the VCO of FIG. 1. It comprises a nearly continuous component Xmi(ε) which is a function of the phase error ε existing between the symbol synchronism present in the sample sequence $x_k$ and the clock signal $f'_{clk}$. In addition even the sign of Xmi(ε) agrees with that required for a control of the VCO in negative feedback. The band width of the low pass filter LOOPFIL is chosen with a compromise criterion between two opposing requirements of which a first is that of acquiring rapidly the synchronism and a second is that of having a low phase jitter in the clock signal generated locally. As known, in a PLL, synchronism acquisition time is inversely proportionate to the loop band width which coincides generally with that of the loop filter. It is also known that the phase jitter due to noise grows with increasing loop band. Therefore, desiring to widen the band of LOOPFIL to allow rapid synchronism acquisition there is unavoidably produced an increase of said phase jitter. As regards the choice of the optimal band width for the LOOPFIL of the example, it has been found that a good compromise is a FIR type 32-section digital filter.

The above considerations allow identification in the following blocks: A/D-CONV1, A/D-CONV2, SIGN1, SIGN2, SOM, SHR1, DFT, LOOPFIL, DIV2, VCO and in their interconnection, the configuration of a phase loop link (PLL) provided digitally, including only partially a symbol synchronism regenerator limited to the distorter represented by the blocks SIGN1, SIGN2 and SOM.

As regards the block STAB it also belongs to the PLL, but it is preferable to posticipate the function after discussing the operation of the blocks SHR2, SHR2', HU-DET and SIM-CORR. As regards operation of the above said PLL, it is now discussed with the aid of FIG. 5, FIGS. 6 to 10 and FIGS. 6' to 10'.

FIG. 5 charts the above function Xmi(ε) referred to the sequence xmi(T) calculated by the block DFT of FIG. 1. The behaviour of the function Xmi(ε) corresponds to that of the nearly continuous component of the voltage emerging from a know phase comparator where the reference signal for the comparison is found through an amplitude distortion of the symbols, or samples, consisting of calculating their absolute value. This behaviour corresponds to the triangular function. Therefore, the block DFT is assimilable with a phase comparator. With the aid of FIG. 5 there are now discussed the different locking cases of the PLL of FIG. 1. As may be seen, the function Xmi(ε) has a periodicity $2\pi$ and is cancelled at points 0 and $\pm n\pi$. The convergent arrows indicate on the curve the link points of the PLL stable equilibrium operation, these points correspond to even values of n (0 included). While the divergent arrows indicate the link points in unstable equilibrium operation, otherwise termed 'hangup', corresponding to odd values of n. At the stable equilibrium points the slope of the curve is positive, contrary to what occurs at the unstable equilibrium points. The different locking situations are identified by the crossing of two lines parallel to the axis ε, of equations Xmi(ε) = ±Va, with the curve. With each of the three crossing points correspond two values of ε indicated by ±a, $\pi$±a, $-\pi$±a, respectively representing offset values of the phase of the signal $f'_{clk}$ compared with the symbol synchronism evaluated at the corresponding locking point. Even the sign of the function Xmi(ε) is that required for negative feedback control of a VCO. Indeed, increasing positive values of Xmi(ε), or decreasing negative values, cause increases or decreases respectively of the frequency generated by the VCO tending in both cases to annul the phase error ε.

FIGS. 6 to 10 and 6' to 10' show the manner in which the function Xmi(ε) is constructed starting from the sample sequence $x_k$. The value of the function is taken only at the more significant points. However FIGS. 6' to 10' show the behaviour also at the intermediate points. As the first step it is necessary to calculate the phase error ε given by the difference between the clock signal phase taken from the symbols and the reading clock phase thereof generated locally. The clock phase taken from the symbols and evaluated on the time axis t corre-

sponds to T/2 ($\pm$ multiples of T), while the phase of the reading clock, generated locally, is read opposite the value of t in the centre of two samples of a generic pair $x_0$, $x_1$ or $x_1$, $x_2$. It is advisable to relate the calculations to a single symbol and to the sample pair representing it in the correct locking situation. The reading clock in question is $f'_{clk}$ because the situation shown in FIGS. 6 to 10 anticipates any correction done on the symbols and on the clock $f'_{clk}$ itself. Accordingly, for each of the FIGS. 6' to 10' is shown on the abscissa the phase error $\varepsilon$ found with the above method, the respective ordinate value is found by calculating the algebraic sum Xmi = -x0 +x1 -x2 +x3, and the four values of x are taken from the corresponding FIGS. 6 to 10.

In view of the above, FIG. 6 shows a correct locking situation in which the samples $x_0$ and $x_1$ (FIG. 1) fall at time T/4 and 3T/4 from the beginning of a first symbol $s_{j-1}$ and the samples $x_2$ and $x_3$ (FIG. 1) fall at times T/4 and 3T/4 from the beginning of a second symbol Sj. Calculating the phase error with reference to the symbol $s_{j-1}$ and to the pair of samples $x_0$ and $x_1$ there is found $\varepsilon = 0$. The corresponding value of Xmi($\varepsilon$) is null.

FIG. 7 shows a hangup situation in which the sample $x_0$ falls at a time -T/4 from the end of a first symbol $s_{j-2}$, the samples $x_1$ and $x_2$ fall at times T/4 and 3T/4 respectively from the beginning of a second symbol $s_{j-1}$, and the sample $x_3$ falls at time T/4 from the beginning of a third symbol Sj. Calculating the phase error as in FIG. 6 there is found $\varepsilon = \pi$. In this case also the corresponding value of Xmi($\varepsilon$) is null.

FIG. 8 shows a situation in which the phase error is $+\pi/2$. In this case the samples $x_0$ and $x_1$ fall at times 0 and T/2 from the beginning of a first symbol $S_{j-1}$ and the samples $x_2$ and $x_3$ fall at times 0 and T/2 from the beginning of a second symbol Sj. Calculating the phase error as in FIG. 6 there is found $\varepsilon = +\pi/2$. The corresponding value of Xmi($\varepsilon$) is given by $(+x_1) + (+x_3)$.

FIG. 9 shows a hangup situation in which the sample $x_0$ falls at a time 3T/4 from the beginning of a first symbol $S_{j-1}$, the samples $x_1$ and $x_2$ fall at times T/4 and 3T/4 from the beginning of a second symbol Sj and the sample $x_3$ falls at time T/4 from the beginning of a third symbol $S_{j+1}$. Calculating the phase error as in FIG. 6 there is found $\varepsilon = -\pi$. In this case also the corresponding value of Xmi($\varepsilon$) is null.

Lastly, FIG. 10 shows a situation in which the samples $x_0$ and $x_1$ fall at times T/2 and T from the beginning of a first symbol $S_{j-1}$ and the samples $x_2$ and $x_3$ fall at times T/2 and T from the beginning of a second symbol Sj. Calculating the phase error as in FIG. 6 there is found $\varepsilon = -\pi/2$. The corresponding value of Xmi($\varepsilon$) is given by $(-x_0) + (-x_2)$.

FIGS. 11 and 12 show the temporal behaviour of the three symbols $S_{j-2}$, $S_{j-1}$ and Sj of FIGS. 6 to 10 and the respective samples of the sequence p(kT/2) indicated in FIG. 1 by $p_0$, $p_1$, $p_2$ and $p_3$. Specifically, FIGS. 11 and 11' show a correct locking situation comparable to that shown in FIGS. 6 and 6'. As may be seen, the symbol reading instants, corresponding to the rising edges of the signal $f'_{clk}$, fall exactly at the midpont thereof. FIGS. 12 and 12' show a hangup situation comparable to that shown in FIGS. 7 and 7'. In this case the symbol reading instants fall at points spaced T/2 away from the midpont thereof.

There is now explained the operation of the hangup detection block HU-DET (FIG. 2) and synchronism correction block SIM-CORR (FIG. 3) which, strictly speaking, cannot be considered part of the PLL in the same way as the remaining blocks. This operation, for the sake of simplicity, refers to FIGS. 11, 11', 12 and 12' relative to only the symbols vp(t) and analogous considerations apply also for the symbols vq(t) not represented.

The sequences vp(t) and vq(t) must include phase transitions allowing recovery, by means of sample amplitude distortion, of the line at the symbol frequency to be applied to the reference input of the phase comparator to allow the PLL to reach and maintain the locking. In the absence of transitions the control voltage of the VCO would be without information. In the synchronism acquisition phase an appropriate preamble sequence added during transmission at the head of the sequence of symbols to be transmitted fulfils this purpose. In the preamble sequence both components of a symbol change sign are passing from one symbol to the next. FIGS. 11 and 12 show the case of only the component vp(t). Hereinafter it is the line code of the transmitted data (scrambling) preventing generation of symbol strings with sequences of 1 or 0 too long.

This stated, and in the case where vp(t) and vq(t) respect the preamble sequence, detection of a hangup consists of verifying for each sample pair p(kT/2) or q(kT/2) acquired the existence of a sign discordance between the samples, an affirmation clarified below.

In practice, verification on the samples of only one of the two sequences would suffice but the analysis of both the sequences ensures greater safety.

The samples $p_0$, $p_1$, $p_2$, $p_3$ and $q_0$, $q_1$, $q_2$, $q_3$ (FIG. 1) represent the status of the shift registers SHR2 and SHR2' at a particular sampling instant. Said samples are memorised on the rising edges of the signal $2f'_{clk}$ as indicated in FIGS. 11' and 12'. At each updating of the registers SHR2 and SHR2' the voltage at the output of the gate 5 of FIG. 2, corresponding to a signal AHU', takes an true logical value when a discordance of values appears at the inputs of at least one of the gates 1, 2, 3 and 4, and false otherwise. Since the signal AHU' can vary with every new sample acquired, it supplies the outcome of the comparison of the sign of two consecutive samples and not of that of samples belonging to consecutive pairs. It is therefore necessary to consider the value of signal AHU' every two samples compared. This is done by the shift register SHR3 where the bit corresponding to the logical value of AHU' is loaded on the falling edge of the signal $f'_{clk}$. Said register, together with the adders 6 and 7, creates a persistence on the signal AHU' obtained by comparison thereof with a threshold having hysteresis. The comparison supplies the two logical values of the hangup detection signal AHU without false detections due to disturbances. The two operations of persistence and comparison are discussed below starting from an initial situation in which the shift register SHR3 is empty and the output of the adder 7 is at value 0, corresponding to a correct link situation. Every time the signal AHU' is true, the content of SHR3 translates by one position and a 1 is loaded. If the condition of true AHU' persists for another 15 times, the output of the adder 6 is always at value 1 and the output of the adder 7 is increased up to value 16. Reaching the value 16 corresponds to the threshold for switching of the hangup detection signal AHU from false to true, indicating the occurrence of a hangup. If the previous condition on AHU' is prolonged beyond the 16 times the output of the adder 6 is zero, the output of the adder 7 persists at value 16, and the signal AHU remains unchanged. If at this point the signal AHU' becomes false, a zero reaches the + input of the adder 6 and is loaded in SHR3, still full. The output of the adder 6 takes on the value -1 and the adder 7 is decreased by one unit. If the condition AHU' false persists for another 15 times, the output of the adder 6 is still at the value -1 and the output of the adder 7 is decreased to value 0. Reaching value 0 corresponds to the threshold for switching the signal AHU from true to false, indicating thus a correct link of the PLL. If the condition AHU' is prolonged beyond 16 times, the output of the adder 6 is still zero as is the output of the adder 7 and the value of AHU remains unchanged. In view of the foregoing, the amplitude of the hysteresis mesh is 16 samples and the two thresholds correspond to the hexadecimal values 00 and 10.

It now remains to clarify further the above affirmation according to which the existence of a hangup is detected by verifying for each pair of samples $p_0$, $p_1$, etc. acquired the existence of a sign discordance between the samples. In this case the clarification is supplied directly by FIGS. 12 and 12' making clear this hangup situation. As may be seen, in corrispondence of opposite falling edges of the signal $f'_{clk}$ the samples $p_0$ and $p_1$ compared with each other have, just as $p_2$ and $p_3$, a contrary sign because they belong to different symbols with discord sign ($S_{j-2}$, $S_{j-1}$, $S_j$). FIGS. 11 and 11' make clear the contrary case, i.e. that in a correct link situation said sign discordance does not exist and indeed each pair of samples belongs to a respective symbol ($S_{j-1}$, $S_j$). The above affirmations are based on a phase relationship between the signals $2f'_{clk}$ and $f'_{clk}$ like that shown in the figures, corresponding to the phase relationship obtained at the output of the divider DIV2 of FIG. 1.

The signal AHU is used by the loop stabiliser block STAB of FIG. 1 to stabilise the equilibrium point of the PLL in a hangup case. For this purpose, the block STAB includes a 2-input selector, not shown in the figures, at which arrive the samples of the sequence xmif(T) emerging from the loop filter LOOPFIL (FIG. 1) and the same samples with inverted sign. At the selection input arrives the signal AHU. In case of correct link of the PLL the signal AHU selects at output the samples with their actual sign, while in case of hangup the samples with inverted sign pass. The sign inversion makes positive the slope of the function $Xmi(\varepsilon)$ at the hangup point of the PLL, i.e. it is sufficient to stabilise the equilibrium at said point, but it does not suffice to supply a correct reading clock for the symbols. Indeed, as may be seen from FIGS. 12 and 12' showing a hangup situation, the rising edge of the signal $f'_{clk}$ falls half way of the distance between two samples belonging to different symbols and not the same symbol as it should.

The synchronism correction block SIM-CORR of FIG. 3 corrects the above by inverting the phase of signal $f'_{clk}$ in the case of hangup. Therefore, it supplies a reading clock $f_{clk}$ such that whether correct link or hangup the rising edges of the signal $f_{clk}$ fall half way of the distance between two samples belonging to a same symbol. Said edges thus correspond perfectly with the central values of the symbols as may be seen in FIGS. 11, 11', 12 and 12'. Therefore the signal $f_{clk}$ is the synchronism actually recovered that can be used for reading the symbols vp (t) and vq(t). In the circuit of FIG. 1 said reading is avoided because the synchronism correction block SIM-CORR supplies at output the values Pcor and Qcor which, unless there is a scale factor, represent the central values of the pulses vp(t) and vq(t). The value Pcor is found by adding with symbol cadence the two samples of a same symbol together as takes place for the value Qcor. The samples to be added are present in the registers SHR2 and SHR2' and have a relationship with the symbols as shown on FIGS. 11 and 12 for only the register SHR2.

In view of the above, the signal AHU is suited to discriminate between the different situations, i.e. it discriminates whether two samples belonging to an actual pair of samples also belong to the same symbol. Operationally the interpolation is done by choosing a first sample, e.g. $p_1$, of an actual pair present in SHR2 and the choice of the second sample to be added to the first depends on the presence or absence or better on the logical value of the signal AHU. Indeed, with the signal AHU absent we have the case of FIG. 11 and the second sample is $p_0$. While with hangup detection signal AHU present we have the case of FIG. 12 and the second sample is $p_2$.

Similar considerations apply in the case where as first sample there is chosen $p_0$ and in this case the register SHR2 must contain the symbols $S_{j-2}$ and $S_{j-1}$. More generally, the above initial sample is included between two other samples which are two sampling periods apart. From the foregoing it can be seen that the interpolation involves at most three samples p(kT/2) of the four present in SHR2. At each symbol time, the above three samples, related each time to different sample pairs, are always at the same outputs of the register SHR2. Operationally, the choice of the second sample to be sent to the adder 10 is made by the logical value of the hangup detection signal AHU applied to the selection input of the 2-input selector 8 at whose signal inputs arrive the samples present on the busses BP0 and BP2 which, seen at symbol frequency, are the samples $p_0$ and $p_2$ respectively. The bus BP1 carries towards the adder 10 the above said first sample to be added which, at symbol cadence, is precisely the sample $p_1$.

The output of the adder 10 is sampled at the signal $f'_{clk}$ frequency, using for the purpose the register LTCH1. Considerations similar to those for the interpolation of the samples $p(kT/2)$ apply also for the samples $q(kT/2)$ related to the registers SHR2' and LTCH2, to the busses BQ0, BQ1 and BQ2, to the 2-input selector 9 and to the adder 11.

With reference to the circuits of FIG. 3, it is necessary to state that by the term interpolation is meant an arithmetical mean of the values of the two samples reaching the adders 10 and 11 respectively. For this purpose, the values Pcor and Qcor are found by taking the numerical values at the output of said adders and excluding from both the least significant bit, which is equivalent to dividing by two. When the phase error is null the averaged samples are equal to each other and in this case the interpolation might seem superfluous. The usefulness of the interpolation appears more evident in the presence of phase errors, in this case the two samples can differ considerably from each other so that neither of them represents a good approximation of the actual value of the symbol but this does not occur for the averaged value.

The considerations concerning the non-limiting example described apply also in the case where the symbols do not have components. By assimilating in this case the symbols only with the component vp(t) all the figures remain valid provided everything related to the component vq(t) including the adder SOM of FIG. 1 is cancelled from FIGS. 1-3.

**Claims**

1. Method for recovering symbol synchronism in the reception of digitally modulated signals, the symbols, or optionally their vectorial components 'in phase' and 'in quadrature', being in the form of pulse sequences with different polarities and frequent transitions between polarities with opposite sign, **characterised in that** it comprises the following operations:

   - sampling of said sequential pulses (vp(t)) with a sampling signal ($2f'_{clk}$) having a frequency double that of the symbol frequency, generated by a controlled oscillator (VCO), obtaining the samples of said symbols,
   - division by two of the frequency of said sampling signal ($2f'_{clk}$) for generation of a reading clock signal for said symbols ($f_{clk}$),
   - distortion of the amplitude of said samples to find a sequence of distorted samples ($x_k$) whose frequency spectrum comprises a symbol frequency component,
   - calculation with symbol cadence of the phase shift, or phase error ($\varepsilon$), between said symbol frequency component and said symbol reading clock signal ($f_{clk}$), obtaining a control sequence (xmi(T)) of said controlled oscillator (VCO),
   - low pass filtering of said control sequence (xmi(T)) and extraction of a nearly continuous component ($Xmi(\varepsilon)$) controlling said controlled oscillator (VCO) causing variations in the frequency generated tending to annul said phase error ($\varepsilon$),
   - verification with symbol cadence of the existence of a sign discordance between said samples ($p_0,p_1;p_2,p_3$) of at least one actual sample pair ($p_0,p_1$), and
   - inversion in the case of sign discordance between samples of said actual pair of the phase of said symbol reading clock signal ($f_{clk}$) and of the polarity of said nearly continuous component ($Xmi(\varepsilon)$).

2. Method for recovering symbol synchronism in accordance with claim 1, characterised in that said control sequence (xmi(T)) is found by performing with symbol cadence an algebraic sum of two ($x_0,x_1$) or multiples of two ($x_0,x_1,x_2,x_3$) samples belonging to said distorted sample sequence ($x_k$) preceded by a negative or positive sign alternating between one sample and the next.

3. Method for recovering symbol synchronism in accordance with claim 1, characterised in that said distorted sample sequence ($x_k$) is generated by calculating the absolute value of said samples ($p(kT/2)$) of the symbols, and in that in the case where said symbols have an 'in phase' component (vp(t)) and an 'in quadrature' component (vq(t)) said distorted sample sequence ($x_k$) is generated by adding with sampling cadence the absolute value (ps) of a sample ($p(kT/2)$) belonging to said 'in phase' component with the absolute value (qs) of a sample ($q(kT/2)$) belonging to said 'in quadrature' component.

4. Method for recovering symbol synchronism in accordance with claim 1, characterised in that in the case where said symbols have an 'in phase' component (vp(t)) and an 'in quadrature' component (vq(t)) said verification of the existence of a sign discordance between said samples is done on actual pairs of samples ($p_0,p_1;q_0,q_1$) belonging to the one or the other of said components.

5. Method for recovering symbol synchronism in accordance with claim 1 or 4, characterised in that said verification of the existence of a sign discordance comprises also the following operations:

- setting of a null initial value for the result of a repetitive counting cycle, with said initial null value constituting a first threshold of comparison of the value of said counting reaching which said sign discordance is not considered verified,
- increase by one unit of the value of said counting cycle upon each occurrence of a sign discordance between said compared samples $(p_0, p_1; q_0, q_1)$, or as an alternative decrease by one unit of the value of said counting cycle upon each occurrence of a sign concordance,
- execution, after each said increase or decrease, of a first comparison of the result of the counting with a second threshold higher than the first and reaching which said sign discordance is considered verified, in case of increase tending to exceed said second threshold the count value being kept steadily equal to that of said second threshold, and
- execution, of a second comparison of said result of the count with said first threshold reaching which said discordance condition is inverted in a non discordance condition, in case of decrease tending to exceed said first threshold the count value being held steadily equal to that of said first threshold, the distance between the two thresholds being such as to create a persistence on said sign discordance or non-discordance conditions in order to avoid erroneous detections caused by the presence of disturbances.

6. Method for recovering symbol synchronism in accordance with claim 1, characterised in that in absence of said sign discordance there is performed an interpolation between the samples of said actual pair of samples (p0,p1) belonging to a symbol $(S_{j-1})$ or to an optional said component (vp(t),vq(t)) thereof finding an estimate of the central amplitude value of said symbol $(S_{j-1})$ or component (Pcor,Qcor) at the reading instant, and in that in said case of sign discordance there is performed an interpolation between a first (p0,q0), or second (p1,q1) in order of time, sample of said actual pair and a third sample distant one sampling period preceding said first sample or following said second sample, respectively finding said estimate of the central amplitude value of said symbol $(S_{j-1})$ or component (Pcor,Qcor) at the reading instant.

7. Method for recovering symbol synchronism in accordance with claim 1 or 6 characterised in that said interpolation is an arithmetic mean of said samples.

8. Symbol synchronism recovery circuit in digitally modulated signal receivers with said symbols, or optionally their vectorial 'in phase' and 'in quadrature' components, being in the form of pulse sequences with different polarities and frequent transitions between polarities of opposite signs, comprising: (a) a voltage controlled oscillator (VCO) generating a sampling signal by sampling means of said pulses, (b) means (12,13) for obtaining a symbol reading clock signal, (c) means (A/D-CONV1,2; SIGN1,2; 50M) for generating a sequence of distorted samples $(x_k)$ of said pulses, (d) means (SHR1, DFT) for extracting a symbol frequency component from the frequency spectrum of said distorted sample sequence, (e) a phase comparator generating a control signal for the VCO function of the phase shift, or phase error ($\varepsilon$), existing between said symbol frequency component and said symbol reading clock signal and said control signal piloting the VCO in negative feedback tending to cancel out said phase error ($\varepsilon$), (f) a low pass or loop filter (LOOPFIL) letting pass towards the VCO only one nearly continuous component (Xmi($\varepsilon$)) of said control signal, (g) means (HU-DET) for detection of 'hangups' at points distinguished by phase errors of $\pm n\pi$ with n odds, **characterised in that**:

- said means (12,13) for obtaining the symbol reading clock signal ($f'_{clk}$) comprise a frequency divider (DIV2) dividing by two the frequency of the signal ($2f'_{clk}$) generated by the VCO, obtaining said symbol reading clock signal ($f_{clk}$), and comprise also a phase inverter (12,13) controlled by a hangup detection signal (AHU) which in case of hangup inverts the phase of said symbol reading clock signal ($f'_{clk}$).
- said detection means for 'hangups' comprise a circuit (1,2,3,4,5,6,7,SHR3) which with symbol cadence verifies the existence of a sign discordance between samples of at least one actual pair of samples (p0,p1) coming from said sampling means (A/D-CONV1,2), said verification circuit on the basis of a presence, or absence, of said sign discordance generating, or removing, said hangup detection signal (AHU),
- in that said nearly continuous component (Xmi ($\varepsilon$)) traverses a polarity reversing circuit (STAB) controlled by said hangup signal which lets pass unchanged towards the VCO said component, or reverses its sign in case of removal, or generation, respectively of said hangup signal.

9. Symbol synchronism recovery circuit in accordance with claim 8, characterised in that said extraction means for a symbol frequency component and said phase comparator are provided by means of a first adder (DFT) performing with symbol cadence an algebraic sum of two $(x_0, x_1)$ or multiples of two $(x_0, x_1, x_2, x_3)$ sequential samples belonging to said distorted sample sequence $(x_k)$ preceded by a negative or positive sign alternating between one sample and the next to obtain a sequence (xmi(T)) corresponding to said control signal of the VCO.

10. Symbol synchronism recovery circuit in accordance with claim 8, characterised in that said generation means (SIGN1) of a distorted sample sequence ($x_k$) comprise a sign detector for samples coming from said sampling means (A/D-CONV1), said detector supplying at output a +1 value in correspondence of positive input samples (p(kT/2)) and a -1 value in correspondence of negative input samples (p(kT/2)), and also comprise a multiplier multiplying the values emerging from said sign detector for said input samples (p(kT/2)), obtaining absolute values (ps) of said input samples constituting said distorted sample sequence ($x_k$).

11. Symbol synchronism recovery circuit in accordance with claim 8, characterised in that in the case where said symbols have 'in phase' components (vp(t)) and 'in quadrature' components (vq(t)) said generation means (SIGN1,SIGN2,SOM) of said distorted sample sequence ($x_k$) comprise:

   - detectors of the sign of samples belonging to said components in phase or in quadrature supplying at output a +1 or -1 value in correspondence of positive or negative input samples respectively,
   - multipliers multiplying the values emerging from said sign detectors for the values of respective input samples (p(kT/2),q(kT/2)), obtaining absolute values (ps,qs) of said input samples, and
   - a second adder (SOM) performing with sampling cadence the sum of said absolute values (ps) of samples (p(kT/2)) belonging to said 'in phase' component with absolute values (qs) of corresponding samples (q(kT/2)) belonging to said 'in quadrature' component to obtain said distorted sample sequence ($x_k$).

12. Symbol synchronism recovery circuit in accordance with claim 8, characterised in that in the case where said symbols have an 'in phase' component (vp(t)) and an 'in quadrature' component (vq(t)) said circuit verifying the existence of a sign discordance performs said verification on actual sample pair ($p_0,p_1;q_0,q_1$) belonging to one or the other of said components.

13. Symbol synchronism recovery circuit in accordance with claim 8 or 12, characterised in that said hangup detection means (HU-DET) comprise also a circuit checking the persistence of said presence, or absence, of sign discordance and supplies a persistence value to a comparator with hysteresis comparing said persistence value with a first threshold reaching which there is generated said hangup detection signal (AHU) and with a second threshold, lower than the first, reaching which there is removed said hangup detection signal (AHU), the distance between said thresholds corresponding to a persistence value protecting said hangup detection means from erroneous detections caused by the presence of disturbances.

14. Symbol synchronism recovery circuit in accordance with claim 8, characterised in that it comprises also one or more interpolation circuits (8,9,10,11,LTCH1,LTCH2) controlled by said hangup detection signal (AHU), said interpolation circuits performing in case of the presence of said hangup detection signal (AHU) an interpolation between the samples of said actual pair of samples ($p_0,p_1$) belonging to a symbol ($S_{j-1}$), or an optional component (vp(t),vq(t)), and thereof obtaining an estimate of the central amplitude value of said symbol ($S_{j-1}$), or component (Pcor,Qcor), at the reading instant, and performing in the case of absence of said hangup detection signal (AHU) an interpolation between a first sample ($p_0$) or second sample ($p_1$) in order of time, of said actual pair and a third sample, distant one sampling period preceding said first sample, or following said second sample, respectively obtaining said estimate of the central amplitude value of said symbol ($S_{j-1}$) or component (Pcor,Qcor) at the reading instant.

15. Symbol synchronism recovery circuit in accordance with claim 14, characterised in that said interpolation circuits comprise:

   - a selector (8,9) at whose signal inputs arrive said first sample ($p_0$) belonging to said actual pair of samples ($p_0,p_1$) and said third sample ($p_2$) distant one sampling period after said second sample ($p_1$) and at whose selection input arrives said hangup detection signal AHU, said selector letting pass said first ($p_0$) or third ($p_2$) sample in case of absence, or presence, respectively of said hangup detection signal (AHU),
   - a third adder (10,11) at a first input of which arrives a sample emerging from said selector (8,9) and at a second input arrives said second sample ($p_1$) belonging to said actual pair of samples ($p_0,p_1$),
   - a memory register (LTCH1,LTCH2) which with symbol cadence samples the signal emerging from said third adder (10,11), ignoring the least significant bit, and obtaining said estimate of the central amplitude value of said symbol ($S_{j-1}$) or component (Pcor,Qcor) at the reading instant.

16. Symbol synchronism recovery circuit in accordance with claim 14, characterised in that said interpolation circuits comprise:

- a selector (8,9) at whose signal inputs arrive said second sample ($p_1$) belonging to said actual pair of samples ($p_0,p_1$) and said third sample distant one sampling period preceding said first sample ($p_0$), and at whose selection input arrives said hangup detection signal (AHU), said selector letting pass said second ($p_1$) or third sample in case of absence, or presence, respectively of said hangup detection signal (AHU),
- a third adder (10,11) at a first input of which arrives a sample emerging from said selector (8,9) and at a second input arrives said first sample ($p_0$) belonging to said actual pair of samples ($p_0,p_1$),
- a memory register (LTCH1,LTCH2) which with symbol cadence samples the signal emerging from said third adder (10,11), ignoring the least significant bit, and obtaining said estimate of the central amplitude value of said symbol ($S_{j-1}$) or component (Pcor,Qcor) at the reading instant.

**Patentansprüche**

1. Verfahren zur Rückgewinnung der Zeichensynchronisation in Empfängern digital modulierter Signale, Zeichen, oder wahlweise ihrer 'gleichphasigen' oder um 90° verschobenen' Vektorkomponenten, die in der Form von Impulssequenzen mit unterschiedlichen Polaritäten und häufigen Übergängen zwischen Polaritäten mit umgekehrtem Vorzeichen auftreten, **dadurch gekennzeichnet, daß** es die folgenden Verfahren einschließt:

   - Abtastung der genannten sequentiellen Impulse (vp(t)) mit einem Abtastsignal ($2f'_{clk}$) mit der doppelten Frequenz der von einem spannungsgesteuerten Oszillator (VCO) erzeugten Zeichenfrequenz, wobei die Abtastwerte der genannten Zeichen entstehen,
   - Division durch zwei der Frequenz der genannten Abtastsignale ($2f'_{clk}$) zur Erzeugung eines Lesetaktsignals für die genannten Zeichen ($f_{clk}$),
   - Verzerrung der Amplitude der genannten Abtastwerte zur Erkennung einer Sequenz von verzerrten Abtastwerten ($x_k$), deren Frequenzspektrum eine Komponente der Zeichenfrequenz enthält,
   - Berechnung im Zeichenrhythmus von Phasenverschiebung oder Phasenfehler ($\varepsilon$) zwischen der Komponente der genannten Zeichenfrequenz und dem genannten Lesetaktsignal ($f_{clk}$), wodurch eine Steuersequenz (xmi(T)) für den genannten gesteuerten Oszillators (VCO) entsteht,
   - Tiefpaßfilterung der genannten Steuersequenz (xmi(T)) und Auslesung einer fast kontinuierlichen Komponente (Xmi($\varepsilon$)) die den genannten gesteuerten Oszillator (VCO) so steuert, daß Variationen der erzeugten Frequenz mit der Tendenz entstehen, den genannten Phasenfehler ($\varepsilon$) zu annullieren,
   - Überprüfung bei der Zeichenfrequenz, ob zwischen den genannten Abtastwerten ($p_0$, $p_1$ ; $p_2$, $p_3$) ein Vorzeichenunterschied von wenigstens einem aktuellen Abtastwertepaar ($p_0$, $p_1$ ) besteht und
   - Inversion der Phase des genannten Zeichenlesetaktsignals ($f_{clk}$) und der Polarität der genannten kontinuierlichen Komponente (Xmi($\varepsilon$)) im Falle eines Vorzeichenunterschiedes zwischen den Abtastwerten des genannten aktuellen Abtastwertepaares.

2. Verfahren zur Rückgewinnung der Zeichensynchronisation nach Anspruch 1, **dadurch gekennzeichnet, daß** die genannte Steuersequenz (xmi(T)) dadurch gefunden wird, daß bei der Zeichenfrequenz die algebraische Summe von zwei ($x_0$, $x_1$) oder Mehrfachen von zwei ($x_0$, $x_1$, $x_2$, $x_3$) zu der genannten verzerrten Sequenz von Abtastwerten ($x_k$) gehörenden Abtastwerten gebildet wird, denen ein zwischen einem Abtastwert und dem nächsten wechselndes Vorzeichen vorausgeht.

3. Verfahren zur Rückgewinnung der Zeichensynchronisation nach Anspruch 1, **dadurch gekennzeichnet, daß** die genannte verzerrte Sequenz von Abtastwerten ($x_k$) durch Berechnung der Absolutwerte der genannten Abtastwerte (p(kT/2)) gebildet wird, und daß in dem Fall, wo die genannten Abtastwerte eine 'gleichphasige' Komponente (vp(t)) und eine 'um 90° verschobene' Komponente (vq(t)) aufweisen, die genannte verzerrte Sequenz von Abtastwerten ($x_k$) dadurch gebildet wird, daß im Zeichenrhythmus zum Absolutwert (ps) eines zu der'gleichphasigen' Komponente gehörenden Abtastwertes (p(kT/2)) der Absolutwert (qs) eines zu der 'um 90° verschobenen' Komponente gehörenden Abtastwertes (p(kT/2)) addiert wird.

4. Verfahren zur Rückgewinnung der Zeichensynchronisation nach Anspruch 1, **dadurch gekennzeichnet, daß** in dem Fall, wo die genannten Zeichen eine 'gleichphasige' Komponente (vp(t)) und eine 'um 90° verschobene' Komponente (vq(t)) aufweisen, die genannte Überprüfung auf Vorzeichenunterschiede zwischen den genannten Abtastwerten an aktuellen Abtastwertepaaren ($p_0$, $p_1$, $p_2$, $p_3$) vorgenommen wird, die zu der einen oder anderen der genannten Komponenten gehören.

**5.** Verfahren zur Rückgewinnung der Zeichensynchronisation nach Anspruch 1 oder 4, **dadurch gekennzeichnet, daß** die Überprüfung auf Vorzeichenunterschiede auch die folgenden Vorgänge mit einschließt:

- Festsetzung des Anfangswertes Null für das Ergebnis einer sich wiederholenden Zählperiode, wobei der genannte Anfangswert Null eine erste Vergleichsschwelle dafür darstellt, daß die genannte Zählung einen Wert erreicht, für den der genannte Vorzeichenunterschied nicht als erwiesen gilt,
- Erhöhung des Wertes der genannten Zählperiode um eine Einheit jedesmal wenn ein Vorzeichenunterschied zwischen den genannten verglichenen Abtastwerten ($p_0$, $p_1$ ; $q_0$, $q_1$) auftritt, oder als Alternative eine Verminderung des Wertes der genannten Zählperiode um eine Einheit, jedesmal wenn ein Vorzeichenunterschied auftritt,
- Durchführung, nach der genannten Erhöhung oder Verminderung, eines ersten Vergleichs des Zählergebnisses mit einer zweiten Schwelle, die höher liegt als die erste und einen Wert hat, für den der genannte Vorzeichenunterschied als erwiesen gilt, wobei im Falle einer Erhöhung mit der Tendenz, die genannte zweite Schwelle zu überschreiten, der Zählwert ständig auf dem Wert der genannten zweiten Schwelle gehalten wird, und
- Durchführung eines zweiten Vergleichs des genannten Zählergebnisses, wobei die genannte erste Schwelle einen Wert hat, bei dem der genannte unterschiedliche Zustand in einen nicht unterschiedlichen Zustand überführt wird, und wobei im Falle einer Verminderung mit der Tendenz, die genannte erste Schwelle zu unterschreiten, der Zählwert ständig auf dem Wert der genannten ersten Schwelle gehalten wird, und wobei die Distanz zwischen den beiden Schwellen einen Wert hat, bei dem sich ein Beharren auf dem genannten Zustand mit Vorzeichenunterschied oder ohne Vorzeichenunterschied einstellt, sodaß ein durch Störungen verursachtes falsches Erkennen vermieden wird.

**6.** Verfahren zur Rückgewinnung der Zeichensynchronisation nach Anspruch 1, **dadurch gekennzeichnet, daß** bei Abwesenheit des genannten Vorzeichenunterschiedes eine Interpolation zwischen den Abtastwerten des genannten, zu dem Zeichen ($S_{j-1}$) oder zu seiner genannten wahlweisen Komponente ($vp(t)$, $vq(t)$) gehörenden aktuellen Abtastwertepaares ($p_0$, $p_1$) durchgeführt wird, wodurch sich eine Abschätzung der Amplitude des Mittenwertes des genannten Zeichens ($S_{j-1}$) oder der Komponente ($Pcor$, $Qcor$) zum Lesezeitpunkt ergibt, sowie dadurch gekennzeichnet, daß im genannten Fall von Vorzeichenunterschied eine Interpolation zwischen einem ersten ($p_0$, $q_0$) oder in der zeitlichen Reihenfolge zweiten ($p_1$, $q_1$) Abtastwert des genannten aktuellen Paars und einem dritten, eine Abtastperiode entfernten, dem genannten ersten Abtastwert vorausgehenden oder dem genannten zweiten Abtastwert nachfolgenden Abtastwert durchgeführt wird, wobei sich jeweils die erwähnte Abschätzung des Mittenwertes der Amplitude des genannten Zeichens ($S_{j-1}$) oder der Komponente ($Pcor$, $Qcor$) zum Lesezeitpunkt ergibt.

**7.** Verfahren zur Rückgewinnung der Zeichensynchronisation nach Anspruch 1 oder 6, **dadurch gekennzeichnet, daß** die genannte Interpolation das arithmetische Mittel der genannten Abtastwerte ist.

**8.** Schaltkreis zur Rückgewinnung der Zeichensynchronisation in Empfängern digital modulierter Signale mit den genannten Zeichen, oder wahlweise ihrer 'phasengleichen' oder 'um 90° verschobenen' Vektorkomponenten, die in der Form von Impulssequenzen mit unterschiedlichen Polaritäten und häufigen Übergängen zwischen Polaritäten mit umgekehrtem Vorzeichen auftreten, einschließlich: (a) einem spannungsgesteuerten Oszillator (VCO), der durch Abtasten der mittleren Abtastwerte der genannten Impulse ein Abtastsignal erzeugt, (b) Schaltmittel (12, 13) zur Erzeugung eines Zeichenlesetaktes, (c) Schaltmittel (AID-CONV 1,2; SIGN1,2; SOM) zur Erzeugung einer Folge von verzerrten Abtastwerten (xk) der genannten Impulse, (d) Schaltmittel (SHR1, DFT)) zur Auskoppelung einer Komponente der Zeichenfrequenz aus dem Frequenzspektrum der genannten verzerrten Zeichenfolge, (e) ein Phasenvergleicher, der ein Steuersignal für die VCO Funktion für zwischen der genannten Frequenzkomponente und dem genannten Zeichenlesetakt bestehende Phasenverschiebungen oder Phasenfehler ($\varepsilon$) erzeugt und wobei das genannte Steuersignal den VCO mittels negativer Gegenkopplung steuert, mit der Tendenz, den genannten Phasenfehler ($\varepsilon$) auszulöschen, (f) ein Tiefpaßfilter (LOOPFIL) das zum VCO nur die fast kontinierliche Komponente ($Xmi(\varepsilon)$) des genannten Steuersignals durchläßt, (g) Schaltmittel (HU-DET) zur Erkennung von 'nicht programmierten Schleifenstops' an den durch Phasenfehler der Größe $\pm n\pi$ mit n ungeraden Werten charkterisierten Punkten, **dadurch gekennzeichnet, daß**:

- die genannten Schaltmittel (12, 13) zur Erzeugung des Zeichenlesetaktes ($f'_{clk}$) einen Frequenzteiler (DIV2) enthalten, der die Frequenz des vom VCO erzeugten Signals ($2f'_{clk}$) durch zwei teilt, wodurch der genannte Zeichenlesetakt entsteht ($f_{clk}$), und außerdem einen von dem Schleifenstopsignal (AHU) gesteuerten Phasenumsetzer (12, 13) enthalten, der im Falle eines Schleifenstops die Phase des genannten Zeichenlesetaktsignals ($f'_{clk}$) umkehrt,

- die genannten Schaltmittel zur Erkennung von 'Schleifenstops' einen Schaltkreis (1, 2, 3, 4, 5, 6, 7, SHR3) enthalten, der im Zeichenrhythmus das Vorhandensein unterschiedlicher Vorzeichen zwischen den Abtastwerten wenigstens eines der von den genannten AbtastSchaltmitteln (A/D-CONV1, 2) kommenden aktuellen Abtastwertepaares ($p_0$, $p_1$) auf der Basis des Vorhandenseins oder Nichtvorhandenseins der genannten unterschiedlichen Vorzeichen überprüft und das genannte Schleifenstopsignal (AHU) erzeugt oder entfernt,

- die genannte fast kontinuierliche Komponente ($Xmi(\varepsilon)$) einen von dem genannten Schleifenstopsignal gesteuerten Schaltkreis (STAB) zur Polarisationsumkehr durchläuft, der die genannte Komponente entweder unverändert zum VCO durchläßt, oder im Falle von Entfernung oder Erzeugung des genannten Schleifenstopsignals ihr Vorzeichen umkehrt.

9. Schaltkreis zur Rückgewinnung der Zeichensynchronisation nach Anspruch 8, **dadurch gekennzeichnet, daß** die Schaltmittel zur Auskopplung einer Komponente der Zeichenfrequenz und der genannte Phasenvergleicher durch einen ersten Addierer (DFT) zur Verfügung gestellt werden, der imZeichenrhythmus die algebraische Summe von zwei ($x_0$, $x_1$) oder Mehrfachen von zwei ($x_0$, $x_1$, $x_2$, $x_3$) sequentiellen Abtastwerten bildet, die zur der gennannten verzerrten Abtastwertesequenz ($x_k$) gehört und dem zwischen einem Abtastwert und dem nächsten abwechselnd eine negatives oder positives Vorzeichen vorausgeht, sodaß man die Sequenz ($xmi(T)$) erhält, die dem genannten Steuersignal des VCO entspricht.

10. Schaltkreis zur Rückgewinnung der Zeichensynchronisation nach Anspruch 8, **dadurch gekennzeichnet, daß** die Schaltmittel (SIGN1) zur Erzeugung einer verzerrten Sequenz von Abtastwerten ($x_k$) einen Erkennungsschaltkreis für die von den genannten Abtasteinrichtungen (A/D-CONV1) kommenden Abtastwerte enthalten, wobei der genannte Erkennungsschaltkreis an seinem Ausgang den Wert +1 für positive Abtastwerte ($p(kT/2)$) am Eingang und den Wert -1 für negative Abtastwerte ($p(kT/2)$) am Eingang abgibt, und daß diese außerdem einen Multiplizierer enthalten, der die von dem genannten Zeichenerkennungsschaltkreis für die genannten Abtastwerte ($p(kT/2)$) am Eingang abgegebenen Werte miteinander multipliziert, wodurch man Absolutwerte (ps) der genannten Abtastwerte am Eingang erhält, welche die genannte verzerrte

Folge von Abtastwerten ($x_k$) darstellen.

11. Schaltkreis zur Rückgewinnung der Zeichensynchronisation nach Anspruch 8, **dadurch gekennzeichnet, daß** in dem Fall, wo die genannten Zeichen 'gleichphasige' Komponenten ($vp(t)$) und 'um 90° verschobene' Komponenten ($vq(t)$) enthalten, die genannten Schaltmittel (SIGN1, SIGN2, SOM) für die genannte Folge von verzerrten Abtastwrten ($x_k$) folgendes einschließen:

- Erkennungsschaltkreis für das Vorzeichen der zu den genannten gleichphasigen oder um 90° verschobenen Komponenten gehörenden Abtastwerte, der für positive oder negative Abtastwerte am Eingang jeweils den Wert +1 oder -1 abgibt,

- Multiplizierschaltkreis, der die von dem genannten Vorzeichenerkennungsschaltkreis für die Abtastwerte am Eingang ($p(kT/2)$, $q(kT/2)$) abgebenenen Werte miteinander multipliziert, wodurch man die Absolutwerte (ps, qs) der genannten Abtastwerte am Eingang erhält,

- ein zweiter Addierer (SOM), der im Zeichenrhythmus die Summe der genannten Absolutwerte (ps) der Abtastwerte ($p(kT/2)$) bildet, wobei ($p(kT/2)$) zu der genannten 'gleichphasigen' Komponente mit Absolutwerten (qs) der entsprechenden Abtastwerte gehört und ($q(kT/2)$) zu der genannten 'um 90° verschobenen' Komponente gehört, wodurch man die genannte verzerrte Folge von Abtastwerten ($x_k$) erhält.

12. Schaltkreis zur Rückgewinnung der Zeichensynchronisation nach Anspruch 8, **dadurch gekennzeichnet, daß** in dem Fall, wo die genannten Zeichen 'gleichphasige' Komponenten ($vp(t)$) und 'um 90° verschobene' Komponenten ($vq(t)$) enthalten, der genannte Schaltkreis zur Erkenung von unterschiedlichen Vorzeichen die Überprüfung an einem aktuellen Abtastwertepaar (p0, p1; q0, q1) vornimmt, das zu der einen oder anderen genannten Komponente gehört.

13. Schaltkreis zur Rückgewinnung der Zeichensynchronisation nach Anspruch 8 oder 12, **dadurch gekennzeichnet, daß** die genannten Schaltmittel zur Erkennung von Schleifenstops (HU-DET) außerdem einen Schaltkreis enthalten, der das ständige Vorhandensein oder Nichtvorhandensein der genannten Vorzeichenunterschiede prüft und einen entsprechenden Beharrungswert an einen Phasenvergleicher mit Hysterese weitergibt, wobei der genannte Beharrungszwert mit einer ersten Schwelle verglichen wird, bei deren Erreichen das genannte Schleifenstopsignal (AHU) erzeugt wird, sowie mit einer zweiten Schwelle, niedriger als die erste, bei deren Erreichen das genannte Schleifenstopsignal (AHU) entfernt wird, wobei die Distanz zwischen den genannten Schwellen einem Persistenzwert entspricht, der die genannte Einrichtung zur Schleifenstoperkennung gegen eine durch Störungen hervorgerufene falsche Erkennung schützt.

14. Schaltkreis zur Rückgewinnung der Zeichensynchronisation nach Anspruch 8, **dadurch gekennzeichnet, daß** dieser außerdem einen oder mehrere, von dem genannten Erkennungschaltkreis für Schleifenstops (AHU) gesteuerte Interpolationsschaltkreise (8, 9, 10, 11, LTCH1, LTCH2) enthält, wobei diese Interpolationsschaltkreise beim Auftreten des genannten Erkennungssignals für Schleifenstop (AHU) eine Interpolation zwischen den Abtastwerten des genannten aktuellen Abtastwertepaars ($p_0$, $p_1$) vornimmt, das zu dem Zeichen ($S_{j-1}$) oder einer wahlweisen Komponente (vp(t), vq(t)) gehört, und daraus eine Abschätzung des Amplitudenmittenwertes des genannten Zeichens ($S_{j-1}$) oder der Komponente (Pcor, Qcor) zum Lesezeitpunkt ableitet und im Falle von Abwesenheit des genannten Erkennungssignals für Schleifenstop (AHU) eine Interpolation zwischen dem ersten ($p_0$) oder dem in zeitlicher Reihenfolge zweiten Abtastwert ($p_1$) und einem dritten Abtastwert vornimmt, der eine Abtastperiode entfernt ist und dem ersten Abtastwert vorausgeht oder dem zweiten Abtastwert nachfolgt, wodurch man jeweils die genannte Abschätzung des Amplitudenmittenwertes für das genannte Zeichen ($S_{j-1}$) oder deren Komponente (Pcor, Qcor) zum Lesezeitpunkt erhält.

15. Schaltkreis zur Rückgewinnung der Zeichensynchronisation nach Anspruch 14, **dadurch gekennzeichnet, daß** die genannten Interpolationsschaltkreise folgendes enthalten:

- einen Wähler (8,9), an dessen Signaleingängen der genannte erste, zum genannten aktuellen Abtastwertepaar ($p_0$, $p_1$) gehörende Abtastwert ($p_0$), sowie der eine Abtastperiode nach dem genannten zweiten Abtastwert ($p_1$) folgende genannte dritte Abtastwert ($P_2$) ansteht und an dessen Steuereingang das genannte Schleifenstopsignal (AHU) erscheint, wobei der genannte Wähler den genannten ersten ($p_0$) oder dritten ($P_2$) Abtastwert durchschaltet, je nachdem, ob das Erkennungssignal für Schleifenstop (AHU) anwesend oder abwesend ist,
- einen dritten Addierer (10,11), an dessen erstem Eingang ein von dem genannten Wähler (8, 9) kommender Abtastwert anliegt und an dessen zweitem Eingang der genannte zweite zu dem aktuellen Abtastwertepaar ($p_0$, $p_1$) gehörende Abtastwert ($p_1$) anliegt.
- ein Speicherregister (LTCH1, LTCH2) das im Zeichenrhythmus das von dem genannten dritten Addierer (10, 11) kommende Signal unter Vernachlässigung des niedrigstwertigen Bits abtastet, wodurch man zum Lesezeitpunkt die genannte Abschätzung des Amplitudenmittenwertes des genannten Zeichens ($S_{j-1}$) oder der Komponente (Pcor, Qcor) erhält.

16. Schaltkreis zur Rückgewinnung der Zeichensynchronisation nach Anspruch 14, **dadurch gekennzeichnet, daß** die genannten Interpolationsschaltkreise folgendes enthalten:

- einen Wähler (8,9), an dessen Signaleingängen der genannte, zu dem aktuellen Abtastwertepaar ($p_0$, $p_1$) gehörende zweite Abtastwert ($p_1$) sowie der dem genannten zweiten Abtastwert um eine Abtastperiode vorausgehende genannte erste Abtastwert ($p_0$) ansteht und an dessen Steuereingang das genannte Schleifenstopsignal (AHU) erscheint, wobei der genannte Wähler den genannten zweiten ($p_1$) oder dritten Abtastwert durchschaltet, je nachdem, ob das Erkennungssignal für Schleifenstop (AHU) anwesend oder abwesend ist,
- einen dritten Addierer (10, 11), an dessen erstem Eingang ein von dem genannten Wähler (8, 9) kommender Abtastwert anliegt und an dessen zweitem Eingang der genannte, zu dem aktuellen Abtastwertepaar ($p_0$, $p_1$) gehörende erste Abtastwert ($p_0$) anliegt,
- ein Speicherregister (LTCH1, LTCH2) das im Zeichenrhythmus das von dem genannten dritten Addierer (10, 11) kommende Signal unter Vernachlässigung des niedrigstwertigen Bits abtastet, wodurch man zum Lesezeitpunkt die genannte Abschätzung des Amplitudenmittenwertes des genannten Zeichens ($S_{j-1}$) oder der Komponente (Pcor, Qcor) erhält.

**Revendications**

1. Méthode pour recouvrer la synchronisation des symboles dans la réception de signaux à modulation numérique, les symboles, ou optionnellement leurs composantes vectorielles "en phase" et "en quadrature", étant sous la forme de séquences d'impulsions de différentes polarités et de transitions fréquentes entre les polarités de signes opposés, caractérisée en ce qu'elle comprend les opérations suivantes :

- échantillonnage des dites impulsions séquentielles (vp(t)) par un signal d'échantillonnage ($2f'_{clk}$) ayant une fréquence double de la fréquence des symboles, généré par un oscillateur contrôlé (VCO), pour obtenir les échantillons des dits symboles,

- division par deux de la fréquence du dit signal d'échantillonnage ($2f'_{clk}$) pour générer un signal d'horloge de lecture pour lesdits symboles ($f_{clk}$),
- distorsion de l'amplitude des dits échantillons pour trouver une séquence d'échantillons distordus ($x_k$) dont le spectre de fréquences comporte une composante à la fréquence des symboles,
- calcul, à la cadence des symboles, du décalage de phase, ou erreur de phase ($\varepsilon$), entre ladite composante de fréquence des symboles et ledit signal d'horloge de lecture des symboles ($f_{clk}$), pour obtenir une séquence de contrôle (xmi(T)) du dit oscillateur contrôlé (VCO),
- filtrage passe-bas de ladite séquence de contrôle (xmi(T)) et extraction d'une composante presque continue (xmi($\varepsilon$)) pour contrôler ledit oscillateur contrôlé (VCO) et lui occasionner des variations de la fréquence générée tendant à annuler ladite erreur de phase ($\varepsilon$),
- vérification, à la cadence des symboles, de l'existence d'une discordance de signe entre lesdits échantillons ($p_0$, $p_1$ ; $p_2$, $p_3$) d'au moins une paire d'échantillons ($p_0$, $p_1$) en question, et
- inversion, en cas de discordance de signe entre des échantillons de ladite paire en question, de la phase du dit signal d'horloge de lecture des symboles ($f_{clk}$) et de la polarité de ladite composante presque continue (Xmi($\varepsilon$)).

2. Méthode pour recouvrer la synchronisation des symboles suivant la revendication 1, caractérisée en ce que ladite séquence de contrôle (xmi(T)) est produite en réalisant, à la cadence des symboles, une somme algébrique de deux ($x_0$, $x_1$) ou de multiples de deux ($x_0$, $x_1$, $x_2$, $x_3$) échantillons appartenant à ladite séquence d'échantillons distordus ($x_k$) précédée par une alternance de signe négative ou positive entre un échantillon et le suivant.

3. Méthode pour recouvrer la synchronisation des symboles suivant la revendication 1, caractérisée en ce que ladite séquence d'échantillons distordus ($x_k$) est générée par le calcul de la valeur absolue des dits échantillons (p(kT/2)) des symboles, et en ce que dans le cas où lesdits symboles ont une composante (vp(t)) "en phase" et une composante (vq(t)) "en quadrature", ladite séquence d'échantillons distordus ($x_k$) est générée en additionnant, à la cadence des symboles, la valeur absolue (ps) d'un échantillon (p(kT/2)) appartenant à ladite composante "en phase" avec la valeur absolue (qs) d'un échantillon (q(kT/2)) appartenant à ladite composante "en quadrature".

4. Méthode pour recouvrer la synchronisation des symboles suivant la revendication 1, caractérisée en ce que dans le cas où lesdits symboles ont une composante (vp(t)) "en phase" et une composante (vq(t)) "en quadrature", ladite vérification de l'existence d'une discordance de signe entre lesdits échantillons est réalisée sur des paires d'échantillons ($p_0$, p1; q0, q1) en question appartenant à l'une ou à l'autre des dites composantes.

5. Méthode pour recouvrer la synchronisation des symboles suivant l'une quelconque des revendications 1 ou 4, caractérisée en ce que lesdites vérifications de l'existence d'une discordance de signe comprennent aussi les opérations suivantes :

- mettre une valeur initiale nulle comme résultat d'un cycle de comptage répétitif, ladite valeur initiale nulle constituant un premier seuil de comparaison de la valeur du dit comptage, le fait de l'atteindre ne permet pas de considérer ladite discordance de signe comme vérifiée,
- incrémenter d'une unité la valeur du dit cycle de comptage à chaque occurrence d'une discordance de signe entre lesdits échantillons com-parés ($p_0$, $p_1$ ; $q_0$, $q_1$), ou comme alternative, dé-crémenter d'une unité la valeur du dit cycle de comptage à chaque occurrence d'une concordance de signe,
- exécuter, après chaque dite incrémentation ou décrémentation, une première comparaison du résultat du comptage avec un second seuil plus élevé que le premier, et le fait de l'atteindre permet de considérer ladite discordance de signe comme vérifiée, dans le cas d'une incrémentation tendant à dépasser ledit second seuil, la valeur de comptage étant maintenue constamment égale à celle du dit second seuil, et
- exécuter une seconde comparaison du dit résultat de comptage avec ledit premier seuil, le fait de l'atteindre entraîne une inversion de ladite condition de discordance en une condition de non discordance, le cas de la décrémentation tendant à dépasser ledit premier seuil, la valeur de comptage étant maintenue constamment égale à celle du dit premier seuil, la distance entre les deux seuils étant telle qu'elle créé une persistance de ladite condition de discordance ou de non discordance de signe de manière à éviter des détections erronées causées par la présence de perturbations.

6. Méthode pour recouvrer la synchronisation des symboles suivant la revendication 1, caractérisée en ce qu'en l'absence de ladite discordance de signe, on réalise une interpolation entre les échantillons de ladite paire d'échantillons ($p_0$, $p_1$) en question, appartenant à un symbole ($S_{j-1}$) ou à une dite composante optionnelle (vp (t), vq(t)), en en trouvant une estimation de la valeur de l'amplitude centrale dudit symbole ($S_{j-1}$) ou de ses composantes (Pcor, Qcor) à l'instant de la lecture, et en ce que dans ledit cas de discordance de signe, on réalise une interpolation entre un chronologiquement premier $(p_0, q_0)$, ou second $(p_1, q_1)$ échantillon de ladite paire en question et un troisième échantillon distant d'une période d'échantillonnage respectivement avant ledit premier échantillon, ou suivant ledit second échantillon, pour trouver ladite estimation de la valeur de l'amplitude centrale du dit symbole $(S_{j-1})$ ou composantes (Pcor, Qcor) à l'instant de la lecture.

7. Méthode pour recouvrer la synchronisation des symboles suivant l'une quelconque des revendications 1 ou 6, caractérisée en ce que ladite interpolation est une moyenne arithmétique des dits symboles.

8. Circuit de recouvrement de la synchronisation des symboles dans les récepteurs de signaux modulés en numérique, lesdits symboles, ou optionnellement leurs composantes vectorielles "en phase" et en "quadrature", étant sous la forme de séquences d'impulsions de différentes polarités et de transitions fréquentes entre les polarités de signes opposés, comprenant : (a) un oscillateur contrôlé par une tension (VCO) générant un signal d'échantillonnage en échantillonnant les moyennes des dites impulsions, (b) des moyens (12, 13) pour obtenir un signal d'horloge de lecture des symboles, (c) des moyens (A/D-CONV1, 2 ; SIGN1, 2 ; SOM) pour générer une séquence d'échantillons distordus $(x_k)$ des dites impulsions, (d) des moyens (SHR1, DFT) pour extraire une composante de fréquence des symboles à partir du spectre de fréquences de ladite séquence d'échantillons distordus, (e) un comparateur de phase générant un signal de contrôle pour le VCO, fonction du décalage de phase, ou erreur de phase $(\varepsilon)$, existant entre ladite composante de fréquence des symboles et ledit signal d'horloge de lecture des symboles, ledit signal de contrôle pilotant le VCO en contre-réaction tendant à annuler ladite erreur de phase $(\varepsilon)$, (f) un filtre passe-bas ou filtre de boucle (LOOPFIL) ne laissant passer vers le VCO qu'une composante presque continue (Xmi $(\varepsilon)$) du dit signal de contrôle, (g) des moyens (HU-DET) pour détecter les "décrochages" à des points qui se distinguent par des erreurs de phase de $\pm n\pi$ avec n impair, caractérisés en ce que :

- lesdits moyens (12, 13) pour obtenir le signal d'horloge de lecture des symboles $(f'_{clk})$ comprennent un diviseur de fréquence (DIV2) divisant par deux la fréquence du signal $(2f'_{clk})$ généré par le VCO, pour obtenir ledit signal d'horloge de lecture des symboles $(f_{clk})$, et comprennent aussi un inverseur de phase (12, 13) contrôlé par un signal de détection de décrochage (AHU) qui en cas de décrochage inverse la phase du dit signal d'horloge de lectures des symboles (f'clk),

- lesdits moyens de détection des "décrochages" comprennent un circuit (1, 2, 3, 4, 5, 6, 7, SHR3) qui, à la cadence des symboles, vérifie l'existence d'une discordance de signe entre des échantillons d'au moins une paire d'échantillons $(p_0, p_1)$ en question provenant des dits moyens d'échantillonnage (A/D-CONV1, 2), ledit circuit de vérification basé sur la présence, ou l'absence, de ladite discordance de signe générant, ou supprimant, ledit signal de détection de décrochage (AHU),

- en ce que ladite composante presque continue (Xmi$(\varepsilon)$) traverse un circuit d'inversion de polarité (STAB) contrôlé par ledit signal de décrochage qui laisse passer sans changement vers le VCO ladite composante, ou alors inverse son signe respectivement en cas de suppression, ou de génération, du dit signal de décrochage.

9. Le circuit de recouvrement de synchronisation des symboles suivant la revendication 8, caractérisé en ce que lesdits moyens d'extraction de la composante de fréquence des symboles et ledit comparateur de phase sont fournis par un premier additionneur (DFT) réalisant, à la cadence des symboles, une somme algébrique de deux $(x_0, x_1)$ ou de multiples de deux $(x_0, x_1, x_2, x_3)$ échantillons séquentiels appartenant à ladite séquence d'échantillons distordus $(x_k)$ précédée par une alternance de signes négative ou positive entre un échantillon et le suivant pour obtenir une séquence (xmi(T)) correspondant au dit signal de contrôle du VCO.

10. Le circuit de recouvrement de synchronisation des symboles suivant la revendication 8, caractérisé en ce que lesdits moyens de génération (SIGN1) d'une séquence d'échantillons distordus $(x_k)$ comprennent un détecteur de signe pour des échantillons provenant desdits moyens d'échantillonnage (A/D-CONV1), ledit détecteur fournissant en sortie une valeur +1 correspondant aux échantillons d'entrée positifs (p(kT/2)) et une valeur -1 correspondant aux échantillons d'entrée négatifs (p (kT/2)), et comprennent aussi un multiplieur qui multiplie les valeurs sortant dudit détecteur de signe desdits échantillons d'entrée (p(kT/2)), pour obtenir les valeurs absolues (ps) desdits échantillons d'entrée constituant ladite séquence d'échantillons distordus $(x_k)$.

11. Le circuit de recouvrement de synchronisation des symboles suivant la revendication 8, caractérisé en ce que dans le cas où lesdits symboles ont des composantes (vp(t)) "en phase" et des composantes (vq (t)) "en quadrature" lesdits moyens de génération (SIGN1, SIGN2, SOM) de ladite séquence d'échan-

tillons distordus ($x_k$) comprennent :

- des détecteurs du signe des échantillons appartenant aux dites composantes en phase ou en quadrature fournissant en sortie une valeur +1 ou -1 correspondant respectivement aux échantillons d'entrée positifs ou négatifs,
- des multiplieurs multipliant les valeurs sortant des dits détecteurs de signe pour les valeurs respectives des échantillons d'entrée ($p(kT/2)$, $q(kT/2)$), pour obtenir les valeurs absolues ($ps$, $qs$) des dits échantillons d'entrée, et
- un second additionneur (SOM) qui réalise, à la cadence des échantillons, la somme des dites valeurs absolues ($ps$) des échantillons ($p(kT/2)$) appartenant à ladite composante "en phase" avec les valeurs absolues ($qs$) des échantillons correspondants ($q(kT/2)$) appartenant à ladite composante "en quadrature" pour obtenir ladite séquence d'échantillons distordus ($x_k$).

12. Le circuit de recouvrement de synchronisation des symboles suivant la revendication 8, caractérisé en ce que dans le cas où lesdits symboles ont une composante ($vp(t)$) "en phase" et une composante ($vq(t)$) "en quadrature" ledit circuit vérifiant l'existence d'une discordance de signe réalise ladite vérification sur les paires d'échantillons ($p_0$, $p_1$ ; $q_0$, $q_1$) en question appartenant à l'une ou à l'autre des dites composantes.

13. Le circuit de recouvrement de synchronisation des symboles suivant l'une queconque des revendication 8 ou 12, caractérisé en ce que lesdits moyens de détection de décrochage (HU-DET) comprennent aussi un circuit vérifiant la persistance de ladite présence, ou absence, de discordance de signe et qui fournit une valeur de persistance à un comparateur avec hystérèse qui compare ladite valeur de persistance avec un premier seuil, qui une fois atteint, génère ledit signal de détection de décrochage (AHU) et avec un second seuil, inférieur au premier, qui une fois atteint, enlève ledit signal de détection de décrochage (AHU), la distance entre lesdits seuils correspondant à la valeur de la persistance protégeant lesdits moyens de détection du décrochage contre des détections erronées causées par la présence de perturbations.

14. Le circuit de recouvrement de synchronisation des symboles suivant la revendication 8, caractérisé en ce qu'il comprend aussi un ou plusieurs circuits d'interpolation (8, 9, 10, 11, LTCH1, LTCH2) contrôlés par ledit signal de détection de décrochage (AHU), lesdits circuits d'interpolation réalisant en cas de présence dudit signal de détection de décrochage (AHU), une interpolation entre les échantillons de ladite paire d'échantillons ($p_0$, $p_1$) en ques-

tion appartenant à un symbole ($S_{j-1}$), ou à une composante optionnelle ($vp(t)$, $vq(t)$), et en en obtenant une estimation de la valeur de l'amplitude centrale dudit symbole ($S_{j-1}$), ou composante ($Pcor$, $Qcor$), à l'instant de la lecture, et réalisant en cas d'absence dudit signal de détection du décrochage (AHU), une interpolation entre un chronologiquement premier échantillon ($p0$) ou un second échantillon ($p_1$) de ladite paire en question et un troisième échantillon, distant d'une période d'échantillonnage respectivement avant ledit premier échantillon, ou suivant ledit second échantillon, pour obtenir ladite estimation de la valeur de l'amplitude centrale dudit symbole ($S_{j-1}$) ou composante ($Pcor$, $Qcor$) à l'instant de la lecture.

15. Le circuit de recouvrement de synchronisation des symboles suivant la revendication 14, caractérisé en ce que lesdits circuits d'interpolation comprennent:

- un sélecteur (8, 9) sur l'entrée des signaux duquel arrivent ledit premier échantillon ($p_0$) appartenant à ladite paire d'échantillons ($p_0$, $p_1$) en question et ledit troisième échantillon ($p_2$) distant d'une période d'échantillonnage après ledit second échantillon ($p_1$) et à l'entrée de sélection duquel arrive ledit signal de détection de décrochage (AHU), ledit sélecteur laissant passer ledit premier ($p_0$) ou troisième ($p_2$) échantillon en cas respectivement d'absence, ou de présence, dudit signal de détection de décrochage (AHU),
- un troisième additionneur (10, 11) à la première entrée duquel arrive un échantillon qui sort du dit sélecteur (8, 9) et à la seconde entrée duquel arrive ledit second échantillon ($p_1$) appartenant à ladite paire d'échantillons ($p0$, $p1$) en question,
- un registre mémoire (LTCH1, LTCH2) qui, à la cadence des symboles, échantillonne le signal qui sort du dit troisième additionneur ($1_0$, $1_1$), ignore le bit de poids faible, et obtient ladite estimation de la valeur de l'amplitude centrale du dit symbole ($S_{j-1}$) ou composante ($Pcor$, $Qcor$) à l'instant de la lecture.

16. Le circuit de recouvrement de synchronisation des symboles suivant la revendication 14, caractérisé en ce que lesdits circuits d'interpolation comprennent:

- un sélecteur (8, 9) sur l'entrée des signaux duquel arrivent ledit second échantillon ($p_1$) appartenant à ladite paire d'échantillons ($p_0$, $p_1$) en question et ledit troisième échantillon distant d'une période d'échantillonnage précédant ledit premier échantillon ($p_0$), et à l'entrée de sélection duquel arrive ledit signal de détection de décrochage (AHU), ledit sélecteur laissant passer ledit second ($p_1$) ou troisième échantillon en cas respectivement d'absence, ou de présence, dudit signal de détection de décrochage (AHU),

- un troisième additionneur (10, 11) à la première entrée duquel arrive un échantillon qui sort dudit sélecteur (8, 9) et à la seconde entrée duquel arrive ledit premier échantillon ($p_0$) appartenant à ladite paire d'échantillons ($p_0$, $p_1$) en question,

- un registre mémoire (LTCH1, LTCH2) qui, à la cadence des symboles, échantillonne le signal qui sort dudit troisième additionneur ($1_0$, $1_1$), ignore le bit de poids faible, et obtient ladite estimation de la valeur de l'amplitude centrale dudit symbole ($S_{j-1}$) ou composante (Pcor, Qcor) à l'instant de la lecture.

FIG. 1

HU-DET

SIM-CORR

FIG. 2

FIG. 3

EP 0 649 233 B1

sign(x)

+1

x

−1

FIG. 4

Xmi(ε)

+Va

−π−a
−π
−π+a    −a    +a    π−a    π    π+a    ε

−Va

FIG. 5

vp(t)

p₀    p₁

S$_{i-1}$    FIG. 11

t

S$_i$

p₂    p₃

vp(t)

p₀    p₃

S$_{i-2}$    S$_i$

t

S$_{i-1}$

FIG. 12

p₁    p₂

2f'clk

f'clk

fclk

FIG. 11'

2f'clk

f'clk

fclk

FIG. 12'

FIG. 6

FIG. 7

FIG. 8

FIG. 9

FIG. 10

FIG. 6'

FIG. 7'

FIG. 8'

FIG. 9'

FIG. 10'

EP 0 649 233 B1